# EUROPÄISCHE PATENTSCHRIFT

(11) **EP 0 567 947 B1**
(45) Veröffentlichungstag und Bekanntmachung des Hinweises auf die Patenterteilung: **16.07.1997**
(21) Anmeldenummer: 93106612.0
(22) Anmeldetag: 23.04.1993
(51) Int. Cl.: F16L 9/12, F16L 11/04, B60K 15/03, F02M 37/00

(54) **Schlauch- oder Rohrleitung aus mehreren Polymerschichten**
Conduit of hose or pipe made of several layers of polymers
Conduite de tuyau ou flexible de plusieurs couches de polymères

(30) Priorität: 30.04.1992 DE 4214383
(43) Veröffentlichungstag der Anmeldung: 03.11.1993
(73) Patentinhaber: EMS-INVENTA AG, 8001 Zürich (CH)
(72) Erfinder: Stoeppelmann, Georg, Dr. rer. nat., CH-7402 Bonaduz (CH); Zeh, Bernard, CH-7203 Trimmis (CH)
(74) Vertreter: Müller-Boré & Partner Patentanwälte

(56) Entgegenhaltungen:
- EP-A- 509 211
- EP-A- 542 185
- EP-A- 0 010 751
- EP-A- 0 428 834
- EP-A- 0 509 212
- DE-C- 3 821 723
- DE-C- 3 827 092

## Beschreibung

Die Erfindung betrifft eine Schlauch- oder Rohrleitung für gasförmige oder flüssige Medien, die aus mehreren Polymerschichten besteht und eine verbesserte Barrierewirkung speziell gegenüber Kraftstoffen zeigt.

Rohrleitungen und flexible Schläuche aus Polymeren sind bekannt und werden in vermehrtem Masse für Kühl- und Bremsflüssigkeiten und als Kraftstoffleitungen verwendet.

Insbesondere gehören Kraftstoffleitungen aus Polyamid, speziell aus Polyamid 11 oder Polyamid 12, zum Stand der Technik, der in dem Buch "Kunststoffe und Elastomere in der Praxis", Verlag W. Kohlhammer, Stuttgart-Berlin-Köln-Mainz (1985), beispielhaft behandelt wird.

Ein Nachteil dieser Polymer-Rohrleitungen besteht darin, dass eine beträchtliche Permeation der gebräuchlichen Kraftstoffe durch ihre Wandungen stattfindet, die im Hinblick auf die in den letzten Jahren aufgekommenen Umweltschutz- und Sicherheitsüberlegungen unerwünscht hoch ist.

Ein weiterer Nachteil bei solchen Rohrleitungen besteht in einem beträchtlichen Aufnahmevermögen der Polymere für einzelne Bestandteile der Kraftstoffe, was zu Quellvorgängen und somit zu Längenänderungen der Rohrleitungen führt.

Es wurden deshalb Entwicklungen durchgeführt, um die aus einer einzigen homogenen Schicht Polyamid 11 oder Polyamid 12 bestehenden sogenannten Monorohre zu verbessern. Eine Möglichkeit besteht in dem Uebergang zu Polymer-Mehrschichtrohren mit speziellen Barriere-Schichten aus Polymeren.

Aus den DE 35 10 395 C2, DE 38 27 092 C1 und EP 0 428 834 A2 sind Mehrschicht-Kraftstoffleitungen bekannt, bei denen Ethylen/Vinylalkohol-Copolymere als Barriereschichten vorgesehen sind.

Ethylen/Vinylalkohol-Copolymere mit den geforderten Barriereeigenschaften sind bekannt als ausserordentlich brüchige Polymere mit nur sehr geringer Reissdehnung. Diese Polymere können daher auch nur in geringen Schichtdicken verwendet werden. Darüber hinaus sind diese Polymere bei der Verarbeitung im Extrusionsprozess und im speziellen bei der Coextrusion mit thermoplastischen Polymeren bei Verarbeitungstemperaturen über 200°C nicht thermostabil. Bei diesen Temperaturen erfolgt eine Vernetzung des Polymeren, was zu Gelteilbildung führt. In Folien, für welche diese Ethylen/Vinylalkohol-Copolymere entwickelt wurden, kann eine Gelteilbildung sofort erkannt werden und führt aus optischen und ästhetischen Gründen zur Aussonderung. Bei dickwandigen Rohren mit eingefärbten Polymeren sind Gelteile jedoch nicht sichtbar, aber qualitätsmindernd. Damit stellen sich ausserordentlich hohe Anforderungen an die Qualitätssicherung.

In der DE 38 21 723 C1 wird als Lösung ein Dreischichtrohr vorgeschlagen mit einer rohrinnenseitigen, geschlossenen Beschichtung aus Polyolefin und äusseren Schutzschichten aus Polyamid. Aus Literatur und Permeationsmessungen ist bekannt, dass Polyolefine eine gute Barriere gegen Alkohole und Polyamide eine gute Barriere gegen Kohlenwasserstoffe bilden. Kraftstoffe für Kraftfahrzeuge sind aber Gemische aus Kohlenwasserstoffen und Alkoholen.

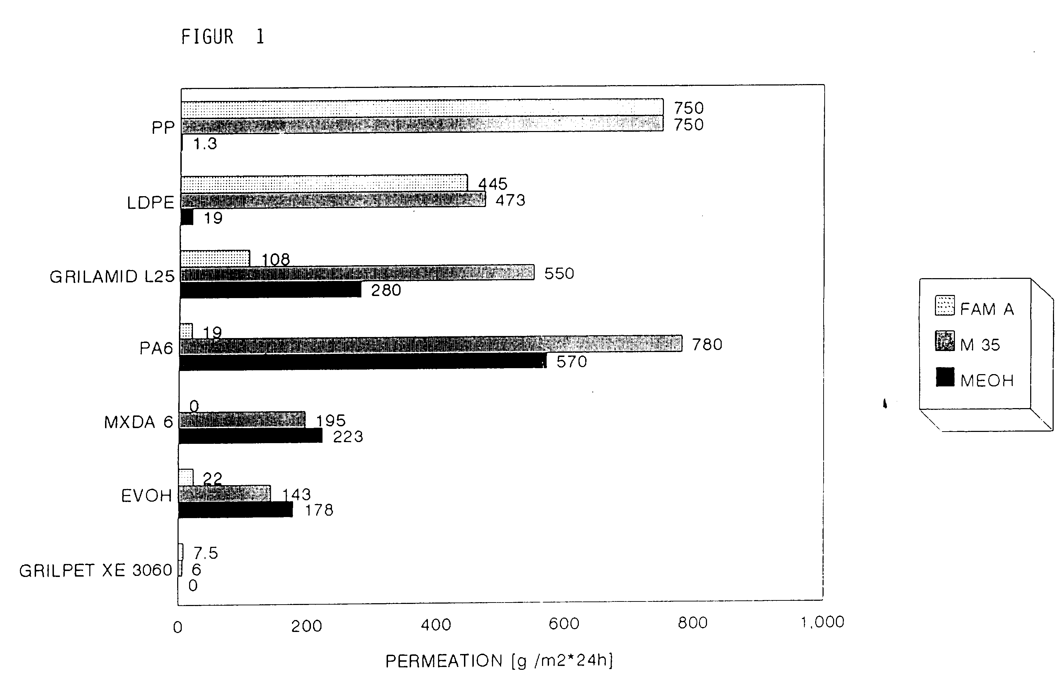

Die beiliegende Figur 1 zeigt die Barrierewerte der Polymer-Komponenten, welche aufgrund gegenseitiger Einflüsse nicht direkt auf Gemische der Kraftstoffkomponenten übertragen werden können, und dass das Permeationsproblem somit nicht zufriedenstellend durch einen Mehrschichtaufbau, in dem einzelne Polymere eine gute Barrierewirkung gegen einzelne Kraftstoffkomponente haben, gelöst werden kann. Die ausserordentlich guten Barrierewerte von Polyester am Beispiel XE 3060 sind aus diesem Vergleich ebenfalls klar ersichtlich.

DE 38 27 092 C1 schützt ein coextrudiertes Mehrschicht-Rohr aus Polymeren, das durch eine aussen aufgebrachte Polyester-Schutzschicht thermisch kurzzeitig bis 180°C belastbar ist. Damit wird die Barrierewirkung der erfindungsgemässen Mehrschicht-Leitung mit einer Polyester-Mittel-/Zwischenschicht nicht nahegelegt.

In der EP-A- 0 509 211 (Stand der Tecknik gemäß Artikel 54(3) EPÜ) soll das Problem der miteinander unverträglichen Polymere (Polyester und Polyamid), die keine oder ungenügende Haftung aneinander zeigen, durch Haftvermittlerschichten aus Polyamid, Polyester oder den Blends beider Polymere gelöst werden. Die erzielte Haftung ist jedoch, wahrscheinlich infolge der miteinander unverträglichen Blendkomponenten, unbefriedigend.

Zum Problem der mangelnden Haftung gibt die Folgeanmeldung EP-A- 0 542 185 (Stand der Tecknik gemäß Artikel 54(3) EPÜ) der gleichen Anmelderin, die Rohre mit Polyamid-lnnen- und Außenschichten und Polyester-Zwischenschichten beansprucht, keinerlei Auskunft und nennt auch keine Haftvermittler für diese Kombinationen. Derartige Rohre mit ungebundenen Barriere-schichten sind im Kraftfahrzeugbereich ungeeignet.

Das gilt auch für Rohre nach der Lehre der DE-A- 38 27 092, in denen ein dreischichtiges Innenrohr mit einer, offenbar losen, äußeren thermischen Schutzschicht aus Polyester überzogen worden ist.

Aus den USA sind Entwicklungen bekannt, bei welchen Fluorpolymere als Barriereschicht zum Einsatz kommen sollen. Diese Polymere sind nicht nur sehr teuer, sondern auch schwer zu verarbeiten, schwer zu entsorgen und zeigen in der Coextrusionsverarbeitung nur geringe Verbundhaftung.

Aufgabe der Erfindung ist es deshalb, eine Schlauch- oder Rohrleitung vorzuschlagen, die eine für die heutigen Umweltschutz- und Sicherheitsbestimmungen ausreichend geringe Permeation zeigt, ohne die vorstehend geschilderten Nachteile aufzuweisen.

Diese Aufgabe wird durch die coextrudierte Mehrschicht-Schlauch- oder Rohrleitung mit Barrierewirkung gemäss den Merkmalen des Anspruchs 1 gelöst.

Sie wird speziell gelöst durch eine Mehrschicht-Polymer-Schlauch- oder Rohrleitung, die mindestens eine Barriereschicht aus einem oder mehreren der Polyester nach Anspruch 2 enthält.

Ueberraschenderweise hat sich gezeigt, dass Polyester ausgezeichnete Sperreigenschaften gegen Motorkraftstoffe besitzen. Diese Sperrwirkung ist sowohl gegen reine Kohlenwasserstoffe als auch Alkohol und zugleich gegen ihre Gemische unerwartet hoch, wobei der Alkoholanteil über einen weiteren Konzentrationsbereich variieren kann.

Als Polyester im erfindungsgemässen Sinn kommen beispielsweise Polyethylenterephthalat (PET), Polybutylenterephthalat (PBT) oder Polyethylennaphthalat (PEN) in Frage. Neben der Terephthalsäure eignet sich auch die Isophthalsäure als polyesterbildender Baustein. Auch Blockcopolyetherester mit Polyetherweichsegmenten können verwendet werden.

Ein wesentlicher Vorteil der erfindungsgemässen Schlauch-oder Rohrleitung ist die Mehrschichtigkeit, die es gestattet, die Polyesterbarriereschicht mit Polymerschichten zu kombinieren, die der erfindungsgemässen Leitung weitere wichtige verwendungsbedingte Eigenschaften verleihen.

So ist es auch in vorteilhafter Weise möglich, die Wandung der Schlauch- oder Rohrleitung mit einer ring- oder spiralförmigen Wellung zu versehen, einzelne oder mehrere Schutzschichten antistatisch, schlagzäh oder mit Weichmachern odern anderen Additiven nach dem Stand der Technik zu modifizieren bzw. durch Zugabe von Glasfaser längenstabil zu machen.

Die geringere Hydrolysebeständigkeit von Polyestern im Vergleich zu dem nach dem Stand der Technik für Kraftstoffleitungen eingesetztem PA 11 oder PA 12 kann durch die erfindungsgemässen Mehrschicht-Leitungen ausgeglichen werden. Ebenso kann die tiefere Schlagzähigkeit von PET oder PBT, durch die ein unmodifiziertes PBT-Rohr beispielsweise den Kälteschlagtest nach SAE J 844 nicht besteht, in einem erfindungsgemässen Mehrschichtrohr vermieden werden, das mindestens eine Barriereschicht auf Polyesterbasis und mindestens eine Schutzsicht aus Polyamid besitzt.

Da die Haftung zwischen Polyestern und Polyamiden häufig unzureichend ist, werden Haftvermittlerschichten vorgesehen. Als Haftvermittler eignen sich thermoplastisch verarbeitbare Polymere, welche im thermodynamischen Sinne eine zumindest teilweise Verträglichkeit zu Polyestern und Polyamiden aufweisen. Erfindungsgemäß sind dies Polyurethane, wobei sowohl Polyether- als auch Polyesterurethane vorteilhaft sind.

Mindestens eine der Schutzschichten der erfindungsgemässen Schlauch- oder Rohrleitung besteht aus Polyamid.

Als Polyamide werden vorteilhaft Polykondensate aus aliphatischen Lactamen oder ω (-Omega)-Aminocarbonsäuren mit 4 bis 44 Kohlenstoffatomen oder solche aus aromatischen ω-Aminosäuren mit 6 bis 20 Kohlenstoffatomen eingesetzt.

In gleicher Weise geeignet sind Kondensate aus mindestens einem Diamin und mindestens einer Dicarbonsäure mit jeweils 2 bis 44 Kohlenstoffatomen. Beispiele für solche Diamine sind Ethylendiamin, 1,4-Diaminobutan, 1,6-Diaminohexan, 1,10-Diaminodecan, 1,12-Diaminododecan, meta- und para-Xylylendiamin, Cyclohexyldimethylamin, Bis-(p-aminocyclohexyl)methan und seine Alkylderivate. Beispiele für Dicarbonsäuren sind Bernstein-, Glutar-, Adipin-, Pimelin-, Kork-, Azelainund Sebacinsäure, Dodecandicarbonsäure, 1,6-Cyclohexandicarbonsäure, Terephthalsäure, Isophthalsäure und Naphthalindicarbonsäure.

Dabei sind die Homo- und Copolyamide auf Basis PA6, PA11, PA12, PA12,12, PA10,12, PA6,12, PA6,9, PA6,T, PA6,I, PA12,T, PA12,I, PA12/6,T und deren Gemische besonders bevorzugt. Die erfindungsgemässen Polyamide können die üblichen Zusatzstoffe enthalten wie UV- und Hitzestabilisatoren, Kristallisationsbeschleuniger, Weichmacher, Flammschutzmittel, Gleitmittel, anorganische Füllstoffe und Additive, welche die elektrische Leitfähigkeit erhöhen. In speziellen Ausführungsformen kann die äussere Schutzschicht aus Polyethylenterephthalat oder die innere Schutzschicht aus Polyolefin, bevorzugt aus mit funktionellen Gruppen modifiziertem Polyolefin, bestehen.

Die erfindungsgemässen Mehrschicht-Schlauch- oder Rohrleitungen zeichen sich in vorteilhafter Weise aus durch
- die besonders gute Verarbeitbarkeit der Polyester und speziell des Polybutylenterephthalats zur Barriereschicht
- die gegenüber den zur Zeit üblichen Motor-Kraftstoffen besonders gute Sperrwirkung der Polyester und besonders des Polybutylenterephthalats, die den Ethylen-Vinylalkohol-Copolymeren überlegen ist bei gleichzeitig geringeren Rohstoffkosten.

Speziell für alkoholhaltige Benzine werden deutlich niedrigere Permeationswerte gefunden als bei Mehrschichtrohren, welche als Barriereschicht Polyvinylalkohol enthalten. Die erfindungsgemässen Leitungen sind chemisch beständig gegen die gängigen Treibstoffe, Motoröle, im Automobilbereich verwendeten Säuren, und gegen Streusalze, speziell Zinkchlorid.

Die erfindungsgemässen Schlauch- und Rohrleitungen widerstehen Oxidationsprozessen durch aggressive Kraftstoffe (sourgas), sie sind beständig gegen erhöhte Temperatur und Bestrahlung. Auch bei tiefen Temperaturen besitzen sie eine gute Schlagzähigkeit, so dass der Schlagtest nach SAE J 844 bei -40°C bestanden wird. Der erreichte Berstdruck entspricht ebenfalls den für Benzinleitungen gültigen Normen. Die Leitungen lassen sich durch Wärmeeinwirkung verformen, wodurch auch komplizierte geometrische Anordnungen leicht zugänglich sind.

Beispiele für Ausführungsvarianten mit Schichtaufbau von innen nach aussen sind:
PA/PUR/PBT
PA/PUR/PBT/PUR/PA
PBT/PUR/PA
PO/PO gepfropft/PA/PUR/PBT
PO/PBT/PUR/PA

Bevorzugte Ausführungsformen der erfindungsgemässen Schlauch- oder Rohrleitung sind z.B. 3- oder 5-Schichtleitungen die eine innere und/oder äussere Schutzschicht aus Polyamid, bevorzugt PA12, und eine Barriereschicht aus Polybutylenterephthalat haben, und zu jeder Polyamidschicht eine Haftvermittlerschicht, aus Polyurethan aufweisen.

In vorteilhaften Ausführungsformen ist die Barriereschicht wegen ihrer Sperrwirkung gegen die einzelnen KraftstoffKomponenten als Innenschicht ausgeführt.

Die Schichtdicke der erfindungsgemässen Schlauch- oder Rohrleitung ist unkritisch. Bevorzugt sind

| | |
|---|---|
| Schutzschichten von | 0,2 - 0,6 mm |
| Barrierenschichten von | 0,2 - 0,7 mm |
| Haftvermittlerschichten von | 0,05 - 0,3 mm |

Besonders vorteilhaft, insbesondere gegenüber Sperrschichten auf Basis Polyvinylalkohol, ist, dass die erfindungsgemässe Barriereschicht ohne Komplikationen in Herstellung und Gebrauch bis 2,0 mm Dicke ausgeführt sein kann. Von besonderem Vorteil ist jedoch grundsätzlich, dass die erfindungsgemässen Schlauch- oder Rohrleitungen aufgrund der verbesserten Barrierewirkung mit dünneren Wandstärken und damit kostensparender hergestellt werden können, als die Leitungen nach dem zitierten Stand der Technik.

Definition der in den Beispielen und Tests eingesetzten Materialien:

| | |
|---|---|
| Polybutylenterephthalat | GRILPET XE 3060 (EMS-CHEMIE AG) |
| Polyesterurethan | DESMOPAN 588 (BAYER AG) |
| Weichgemachtes PA 12 | GRILAMID L25W40X (EMS-CHEMIE AG) |
| Weichgemachtes PA 6 | GRILON R47HW (EMS-CHEMIE AG) |
| Polyvinylalkohol | EVAL EC-F (KURARAY) |
| Haftvermittler PP, MSA gepfropft | XE 3153 (EMS-CHEMIE AG) |
| PP | NOVOLEN 1300E (BASF) |
| LDPE | LPDE 150 (DOW PLASTICS) |
| L25 | GRILAMID PA12 natur (EMS-CHEMIE AG) |
| PA6 | GRILON F 40 natur (EMS-CHEMIE AG) |
| MXDA 6 | Mitsubishi (Polyamidtyp aus Metaxylylendiamin und Adipinsäure) (MITSUBISHI KAS. CHEMICAL) |

Die Permeationsmessungen wurden mit einer dynamischen Messanordnung bei 60°C und 4 bar durchgeführt. In den Tests nach DIN 51604 B für Rohre gemäss den Beispielen wurden als Testbenzine FAM B, ein Gemisch aus 42.25 Vol-% Toluol, 25.35 Vol-% Isooctan, 12.68 Vol-% Diisobuten, 4.23 Vol-% Ethanol, 15 Vol-% Methanol und 0.5 Vol-% Wasser, sowie M35 (HALTERMANN-Normbenzin mit 35% Methanol) benutzt. Ihre Resultate in g/m2/h belegen eindrücklich die Ueberlegenheit von Polyester am Beispiel Polybutylenterephthalat vom Typ XE 3060 allein (Vergleichsbeispiel 3) und in den erfindungsgemässen Mehrschichtrohren (Beispiel 1 und 2):

### Figur 1:

Kraftstoff-Permeationswerte von FAM A,
M 35 (Haltermann-Normbenzin mit 35 Vol-% Methanol) und
Methanol an verschiedenen Polymer-Filmen von 50 µ Dicke bei 23 °C nach DIN 51604A.

FAM A ist ein Gemisch aus 50 Vol-% Toluol, 30 Vol-% Isooctan, 15 Vol-% Diisobuten und 5 Vol-% Ethanol.

### Beispiel 1:

Innenschicht 0.6 mm XE 3060, Mittelschicht 0.1 mm DESMOPAN 588 und Aussenschicht 0.3 mm L25W40X (PA 12). Der Gesamtrohrdurchmesser beträgt 8 mm.

### Beispiel 2:

Innenschicht 0.3 mm L25W40X (PA 12), 0.1 mm DESMOPAN 588 und 0.6 mm XE 3060. Der Gesamtdurchmesser beträgt 8 mm.

### Vergleichsbeispiel 1: Monorohr aus L25W40X (PA 12) 8x1 mm.

### Vergleichsbeispiel 2: (DE 35 10 395)

5-Schichtrohr 8x1 mm (Schichten sind von innen nach aussen angegeben): 0.45 mm R47HW (PA 6), 0.15 mm EVAL EC-F, 0.05 mm R47HW, 0.05 mm XE 3153 und 0.3 mm L25W40X (PA12).

### Vergleichsbeispiel 3: Monorohr aus XE 3060 (PBT) 8x1 mm

Der Vergleich der Permeationswerte der erfindungsgemässen Rohre mit solchen zur Zeit in Kraftfahrzeugen industriell eingesetzten ist der nachfolgenden Tabelle zu entnehmen.

| | PERMEATION [g/m²/h] FAM B | PERMEATION [g/m²/h] HALTERMANN/35% MEOH |
|---|---|---|
| Beispiel 1 | 1,1 | 1,1 |
| Beispiel 2 | 2,1 | 2,2 |
| Vergleichsbeisp.1 | 22,8 | 33,0 |
| Vergleichsbeisp.2 | 5,1 | 6,2 |
| Vergleichsbeisp.3 | 0,8 | 1,4 |

## Patentansprüche

1. Coextrudierte Mehrschicht-Polymer-Schlauch-oder Rohrleitung mit Barrierewirkung enthaltend mindestens eine Barriereschicht aus Polyester, mindestens eine Schutzschicht aus Polyamid und mindestens eine Haftvermittlerschicht aus Polyurethan zwischen Polyester und Polyamid.

2. Mehrschicht-Polymer-Schlauch- oder Rohrleitung nach Anspruch 1, dadurch gekennzeichnet, daß der Polyester ausgewählt ist aus der Gruppe Polyethylenterephthalat, Polybutylenterephthalat und Polyethylennaphthalat.

3. Mehrschicht-Polymer-Schlauch oder Rohrleitung nach Anspruch 1 oder 2, dadurch gekennzeichnet, daß das Polyamid ausgewählt ist aus der Gruppe PA6, PA11, PA12, PA12,12, PA10,12, PA6,12, PA6,9, PA6,T, PA6,1, PA12,T, PA12,I, PA12/6,T und deren Gemische.

4. Mehrschicht-Polymer-Schlauch- oder Rohrleitung nach einem oder mehreren der Ansprüche 1 bis 3, dadurch gekennzeichnet, daß das Polyurethan ein Polyetherurethan oder Polyesterurethan ist.

5. Mehrschicht-Polymer-Schlauch- oder Rohrleitung nach einem oder mehreren der Ansprüche 1 bis 4, dadurch gekennzeichnet, daß die Barriereschicht die Innenschicht darstellt.

6. Mehrschicht-Polymer-Schlauch- oder Rohrleitung nach einem oder mehreren der Ansprüche 1 bis 5, dadurch gekennzeichnet, daß sie mindestens eine innere oder äußere Schutzschicht aus Polyamid, mindestens eine Barriereschicht aus Polybutylenterephthalat und mindestens eine Haftvermittlerschicht zwischen Polybutylenterephthalat und Polyamid enthält.

7. Mehrschicht-Polymer-Schlauch- oder Rohrleitung, nach einem oder mehreren der Ansprüche 1 bis 6, dadurch gekennzeichnet, daß sie eine 3-Schichtleitung aus einer Polybutylenterephthalatschicht und einer Polyamidschicht mit einer dazwischenliegenden Haftvermittlerschicht ist.

8. Mehrschicht-Polymer-Schlauch- oder Rohrleitung, nach einem oder mehreren der Ansprüche 1 bis 7, dadurch gekennzeichnet, daß sie eine 5-Schichtleitung mit einer Innenschicht und einer Außenschicht aus Polyamid und einer zwischen zwei Haftvermittlerschichten liegenden Barriereschicht aus Polybutylenterephthalat ist.

9. Mehrschicht-Polymer-Schlauch- oder Rohrleitung nach einem oder mehreren der Ansprüche 1 bis 5, dadurch gekennzeichnet, daß sie eine innere Schutzschicht aus Polyolefin oder mit funktionellen Gruppen modifiziertem Polyolefin enthält.

## Claims

1. Coextruded multilayer polymer hose, tube or pipe with barrier action containing at least one polyester barrier layer, at least one polyamide protective layer and at least one polyurethane primer layer between the polyester and the polyamide.

2. Multilayer polymer hose, tube or pipe according to claim 1, characterized in that the polyester is chosen from the group polyethylene terephthalate, polybutylene terephthalate and polyethylene naphthalate.

3. Multilayer polymer hose, tube or pipe according to claim 1 or 2, characterized in that the polyamide is selected from the group PA6, PA11, PA12, PA12,12, PA10,12, PA6,12, PA6,9, PA6,T, PA6,I, PA12,T, PA12,I, PA12/6,T and mixtures thereof.

4. Multilayer polymer hose, tube or pipe according to one or more of the claims 1 to 3, characterized in that the polyurethane is a polyether urethane or a polyester urethane.

5. Multilayer polymer hose, tube or pipe according to one or more of the claims 1 to 4, characterized in that the barrier layer constitutes the inner layer.

6. Multilayer polymer hose, tube or pipe according to one or more of the claims 1 to 5, characterized in that it has at least one inner or outer polyamide protective layer, at least one polybutylene terephthalate barrier layer and at least one primer layer between the polybutylene terephthalate and polyamide.

7. Multilayer polymer hose, tube or pipe according to one or more of the claims 1 to 6, characterized in that it is a three-layer line of a polybutylene terephthalate layer and a polyamide layer with an interposed primer layer.

8. Multilayer polymer hose, tube or pipe according to one or more of the claims 1 to 7, characterized in that it is a five-layer line with an inner and an outer layer of polyamide and a polybutylene terephthalate barrier layer located between two primer layers.

9. Multilayer polymer hose, tube or pipe according to one or more of the claims 1 to 5, characterized in that it contains an inner protective layer of polyolefin or polyolefin modified with functional groups.

## Revendications

1. Conduite en polymère à plusieurs couches coextrudée sous forme de tube ou de tuyau souple et présentant un effet de barrage, comprenant au moins une couche de barrage en polyester, au moins une couche de protection en polyamide, et au moins une couche d'adhérence en polyuréthane entre le polyester et le polyamide.

2. Conduite en polymère à plusieurs couches sous forme de tube ou de tuyau souple selon la revendication 1, caractérisée en ce que le polyester est choisi parmi le groupe constitué du téréphtalate de polyéthylène, du téréphtalate de polybutylène et du naphtalate de polyéthylène.

3. Conduite en polymère à plusieurs couches sous forme de tube ou de tuyau souple selon la revendication 1 ou 2, caractérisée en ce que le polyamide est choisi parmi le groupe constitué du PA6, PA11, PA12, PA12,12, PA10,12, PA6,12, PA6,9, PA6,T, PA6,1, PA12,T, PA12,I, PA12/6,T, et de leurs mélanges.

4. Conduite en polymère à plusieurs couches sous forme de tube ou de tuyau souple selon l'une ou plusieurs des revendications 1 à 3, caractérisée en ce que le polyuréthane est un polyétheruréthane ou un polyesteruréthane.

5. Conduite en polymère à plusieurs couches sous forme de tube ou de tuyau souple selon l'une ou plusieurs des revendications 1 à 4, caractérisée en ce que la couche de barrage représente la couche interne.

6. Conduite en polymère à plusieurs couches sous forme de tube ou de tuyau souple selon l'une ou plusieurs des revendications 1 à 5, caractérisée en ce qu'elle comprend au moins une couche de protection interne ou externe en polyamide, au moins une couche de barrage en téréphtalate de polybutylène, et au moins une couche d'adhérence entre le téréphtalate de polybutylène et le polyamide.

7. Conduite en polymère à plusieurs couches sous forme de tube ou de tuyau souple selon l'une ou plusieurs des revendications 1 à 6, caractérisée en ce qu'elle est une conduite à 3 couches constituée d'une couche de téréphtalate de polybutylène et d'une couche de polyamide avec une couche d'adhérence intercalée entre celles-ci.

8. Conduite en polymère à plusieurs couches sous forme de tube ou de tuyau souple selon l'une ou plusieurs des revendications 1 à 7, caractérisée en ce qu'elle est une conduite à 5 couches avec une couche interne et une couche exteme en polyamide et une couche de barrage en téréphtalate de polybutylène se trouvant entre deux couches d'adhérance.

9. Conduite en polymère à plusieurs couches sous forme de tube ou de tuyau souple selon l'une ou plusieurs des revendications 1 à 5, caractérisée en ce qu'elle comprend une couche de protection interne en polyoléfine ou en polyoléfine modifiée par des groupements fonctionnels.
